# EUROPEAN PATENT SPECIFICATION

(11) **EP 2 259 506 B1**
(45) Date of publication and mention of the grant of the patent: **28.10.2015**
(21) Application number: 09725815.6
(22) Date of filing: 09.03.2009
(51) Int. Cl.: H04L 29/06, H04L 12/933

(54) **A STREAM MEDIA SERVICE SWITCHING METHOD, SYSTEM AND DEVICE**
EIN FLUSSMEDIENDIENSTUMSCHALTVERFAHREN, SYSTEM UND GERÄT
PROCÉDÉ, SYSTÈME ET DISPOSITIF DE COMMUTATION D'UN SERVICE MULTIMÉDIA EN FLUX

(30) Priority: 28.03.2008 CN 200810090355; 11.08.2008 CN 200810147358
(43) Date of publication of application: 08.12.2010
(73) Proprietor: Huawei Technologies Co., Ltd., Longgang District Shenzhen, Guangdong 518129 (CN)
(72) Inventor: WANG, Geng, Longgang District 518129, Shenzhen (CN)
(74) Representative: Körber, Martin Hans
(86) International application number: PCT/CN2009/070706
(87) International publication number: WO 2009/117917

(56) References cited:
- CN-A- 1 859 525
- CN-A- 1 972 441
- CN-A- 101 115 187
- US-A1- 2007 266 122
- ERICSSON: "Hybrid Mobile TV with Fast Channel Switching in PSS and integration with MBMS", 3GPP DRAFT; S4-060663-FCS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. Athens, Greece; 20061031, 31 October 2006 (2006-10-31), pages 1-7, XP050288962, [retrieved on 2006-10-31]
- "Telecommunications and Internet Converged Services and Protocols for Advanced Networking (TISPAN); IMS based IPTV Stage 3 Specification", ETSI DRAFT; 03127-NGN-R2V006_RM, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.0.6, 24 January 2008 (2008-01-24), pages 1-81, XP014054947, [retrieved on 2008-01-24]
- SHIROOR R G ED - ANONYMOUS: "IPTV and VoD services in the context of IMS", 6 December 2007 (2007-12-06), IP MULTIMEDIA SUBSYSTEM ARCHITECTURE AND APPLICATIONS, 2007 INTERNATIONAL CONFERENCE ON, IEEE, PISCATAWAY, NJ, USA, PAGE(S) 1 - 5, XP031283345, ISBN: 978-1-4244-2671-3 pages 1-5, * page 2 - page 5 *

## Description

### FIELD OF THE INVENTION

The present invention relates to network communication technologies, and in particular, to a method, a system, and an apparatus for switching a streaming service.

### BACKGROUND OF THE INVENTION

The streaming service is a multimedia application that evolves based on the Internet, and refers to a service of transmitting multimedia files such as audio, video and animated pictures on the network in a streaming mode. The mobile streaming service applies the streaming technology on the mobile network and the mobile terminal, and is a streaming service which uses the 2.5G or Third Generation (3G) mobile communication network to provide audios and videos for mobile phones. The contents of the mobile streaming service include news, movies and television, Music Television (MTV), sports, education, industries, and special applications.

With maturity of the 3G mobile communication technologies, introducing the mobile streaming technology into the mobile value-added service becomes one of the hot topics of research on mobile services worldwide. By now, standardization organizations such as Third Generation Partnership Project (3GPP) and 3GPP2 have taken the early initiative in researching the application of the mobile streaming service, and have developed the corresponding standards.

Packet Switched Streaming Service (PSS) is a technology defined by the 3GPP to provide the streaming service for the user. The PSS network architecture includes mobile terminals and a network-side PSS server, and is based on Real Time Streaming Protocol (RTSP). The PSS technology defines a fast content switching technology. It is assumed that the user has established an RTSP session and is watching a content or program. If the user wants to change the current content being watched, the user does not need to send an RTSP SETUP message to establish an RTSP session again, but needs only to send a special RTSP PLAY message. This RTSP PLAY message carries the identifier of the new content that the user wants to watch. In this way, the new content can be delivered through the old media channel, without involving renegotiation of the media, thus improving the switching performance.

The IP Multimedia Subsystem (IMS) is defined by the 3GPP to provide the session (service) control function by using Session Initiation Protocol (SIP) as a basic service control protocol. The IMS provides a service platform, on which Different Application Servers (ASs) provide different services. User Equipment (UE) obtains services from the AS through the IMS. In order to set up a media channel in an IMS session, resources need to be reserved to provide reliable transmission quality. Resource reservation usually takes a long time.

The 3GPP standardization organization initiated a new project lately to research the Internet Protocol Television (IPTV) service based on the IMS and the PSS, with a view to combining the PSS with the IMS to provide the IPTV service.

However, the prior art does not disclose how to use the PSS technology to perform service switching in an IMS architecture, and is unable to provide fast switching for the user through the PSS in the IMS architecture to improve user experience.

US 2007/266122 A1 relates to multimedia session management in communication systems, and in particular to such a session management that allows a smooth and user-friendly switch of multimedia channels.

ERICSSON: "Hybrid Mobile TV with Fast Channel Switching in PSS and Integration with MBMS", 3GPP DRAFT; S4-060663-FCS, MOBILE COMPETENCE CENTRE; 650, ROUTE DES LUCIOLES; F-06921 SOPHIA-ANTIPOLIS CEDEX; FRACE, vol. SA WG4, no. Athens, Greece; 32 October 2006(2006-10-31), page 1-7, XP050288962, [retrieved on 2008-01-24]

### SUMMARY OF THE INVENTION

The present invention provides a method, a system, and an apparatus for switching a streaming service to use the fast switching capability of real-time streams to switch the streaming service in the IMS architecture.

According to the first aspect of the present invention a method for switching a streaming service in an IMS architecture includes:
receiving a switching request by a media server that carries an identifier of requested media from a UE or a Service Control Function (SCF) (123) after the SCF receives the switching request sent by the UE (121); and
using a before-switching media channel by the media server to send switched media content to UE;
wherein the media server sends switching information to a Service Control Function (SCF), and the SCF handles services according to the switching information;
the media server comprises an adaptor and a Packet Switched Streaming service (PSS) server; and
the sending by the media server of the switching information to the SCF comprises: by the adaptor, sending the switching information to the SCF;
wherein the switching information comprises at least one of: identifier of target content of switching, identifier of a target component of switching, user information, identifier of source content of switching, identifier of a source component, substitution relation between before-switching media and after-switching media, mapping relation between a before-switching component and an after-switching component, mapping relation between a media channel and a before-switching media component, mapping relation between the media channel and a after-switching media component, and parameters of a transmission channel required by the content or component.

According to the third aspect of the present invention a media server includes:
a receiving module, adapted to receive a switching request sent by a UE directly, or receive a switching request sent by an SCF after the SCF receives the switching request sent by the UE; and
   a sending module, adapted to use a before-switching media channel to send switched media content to the UE;
   a switching information exchanging module (134), adapted to: transmit switching information to the SCF (123), wherein the switching information comprises at least one of: identifier of target content of switching, identifier of a target component of switching, user information, identifier of source content of switching, identifier of a source component, substitution relation between before-switching media and after-switching media, mapping relation between a before-switching component and an after-switching component, mapping relation between a media channel and a before-switching media component, mapping relation between the media channel and the after-switching media component, and parameters of a transmission channel required by the content or component; and
   wherein:
   the media server comprises an adaptor and a Packet Switched Streaming service (PSS) server, the adaptor is connected with the PSS server, the UE, and the SCF, and the switching information is transmitted by the adaptor to the SCF.

Compared with the prior art, the present invention brings these benefits: The present invention uses the fast switching capability of the PSS in the IMS architecture to switch the streaming service, and use the before-switching media channel to transmit the switched media content in the IMS architecture. At the time of switching, the media channel can be adjusted according to the requirement of transmitting the after-switching media, statistics or charging can be made for the switching, thereby improving the switching speed, the user experience, and the network capability to control the switching.

### BRIEF DESCRIPTION OF THE DRAWINGS

FIG. 1 is a flowchart of a method for switching a streaming service in an embodiment of the present invention;
FIG. 2 is a flowchart of a method for switching a streaming service in the first embodiment of the present invention;
FIG. 3 is a flowchart of a method for switching a streaming service in the second embodiment of the present invention;
FIG. 4 is a flowchart of a method for switching a streaming service in the third embodiment of the present invention;
FIG. 5 is a flowchart of a method for switching a streaming service in the fourth embodiment of the present invention;
FIG. 6 is a flowchart of a method for switching a streaming service in the fifth embodiment of the present invention;
FIG. 7 is a flowchart of a method for switching a streaming service in the sixth embodiment of the present invention;
FIG. 8 is a flowchart of a method for switching a streaming service in the sixth embodiment of the present invention;
FIG. 9 is a flowchart of a method for switching a streaming service in the seventh embodiment of the present invention;
FIG. 10 is a flowchart of a method for switching a streaming service in the eighth embodiment of the present invention;
FIG. 11 is a flowchart of a method for switching a streaming service in the ninth embodiment of the present invention;
FIG. 12 shows a structure of a system for switching a streaming service in an embodiment of the present invention;
FIG. 13 shows a structure of a media server in an embodiment of the present invention; and
FIG. 14 shows a structure of an SCF in an embodiment of the present invention.

### DETAILED DESCRIPTION OF THE EMBODIMENTS

In the IMS-based mobile streaming service, the user needs to switch the content being watched currently, and feels better if the switching is faster. A method for switching a streaming service is put forward herein to enable the user to switch the current content in the IMS-based mobile streaming service, and improve the switching speed.

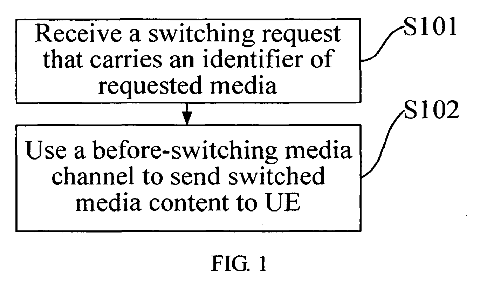

FIG. 1 is a flowchart of a method for switching a streaming service in an embodiment of the present invention. The method includes the following steps:
Step S101: Receive a switching request that carries an identifier of requested media from a UE.

Before the switching request is received from the UE, the UE needs to obtain the capability information of the media server. The capability information indicates whether the media server is capable of using the before-switching RTSP session to switch the service. The UE sends a switching request to the media server only if the media server is capable of using the before-switching RTSP session to switch the service.

The UE may obtain the capability information of the media server through:
a content menu or content list provided by the network; or
the SCF; or
an RTSP session created between the UE and the media server, from which the UE obtains the capability information of the media server directly.

At any time after receiving the switching request sent by the UE, the media server sends a notification message to the SCF, indicating occurrence of the switching.

After receiving the switching request, the media server may perform rights checking on the switching request. More specifically, the media server may obtain the rights check information, and then judge whether the switching request from the UE is acceptable according to the obtained rights check information.

The step of obtaining the rights check information may be: obtaining the rights check information from a functional entity that stores the rights check information, or obtaining the rights check information from the media server in which the information is configured.

The step of performing rights checking on the switching request may also be: sending a rights check request to the SCF to request the SCF to perform rights checking on the switching request. In this case, the step of notifying the switching occurrence to the SCF and the step of sending a rights check request to the SCF may occur simultaneously.

Step S102: Use a before-switching media channel to send switched media content to UE.

Before using the before-switching media channel to send the switched media content to the UE, the media server adjusts the media channel according to the switching request. The detailed adjustment steps may be:
(1) Modify the media channel. If the switched media content imposes different requirements on the media channel, the media server modifies the after-switching media channel according to the new requirements. The requirements include but are not limited to QoS parameters such as bandwidth, jitter, delay, or packet loss ratio.
(2) Add a new media channel. If the media streams in the switched media content are more than the media streams in the before-switching media content, a new media channel is added to transmit the additional media streams after switching.
(3) Release the media channel. If the media streams in the switched media content are less than the media streams in the before-switching media content, the redundant media channel is released.
(4) If the media streams in the switched media content are equal to the media streams in the before-switching media content, the media channels do not need to be adjusted.

The step of using a before-switching media channel to send the switched media content to the UE may be:
If the before-switching media content and the switched media content are in the same media server, the before-switching media channel is used to send the switched media content to the UE.

The step of using the before-switching media channel to send the switched media content to the UE according to the result of rights check may be:
If no switched media content exists in the first media server that provides the before-switching media content for the UE, the first media server obtains the switched media content from the second media server that includes the switched media content, and then uses the before-switching media channel to send the obtained switched media content to the UE.

The first media server may obtain the switched media content from the second media server that includes the switched media content in the following way:
The first media server sends an RTSP session setup request to the second media server to establish an RTSP session, and obtains the switched media content through the RTSP session; or
the first media server obtains the switched media content from the second media server through File Transfer Protocol (FTP).

The operation of performing rights checking on the switching request needs to be performed before the first media server obtains the switched media content from the second media server that includes the switched media content.

The detailed check step may be:
The second media server requests the SCF to check whether the user is entitled to access the content indicated in the switching request; or
the first media server requests the rights check information from the SCF, and then judges whether the switching request from the UE is acceptable according to the rights check information.

The streaming service switching method described above uses the fast switching capability of the real-time streams in the IMS architecture to switch the streaming service, and uses the before-switching media channel to transmit the switched media content, thus improving the switching speed and the user experience.

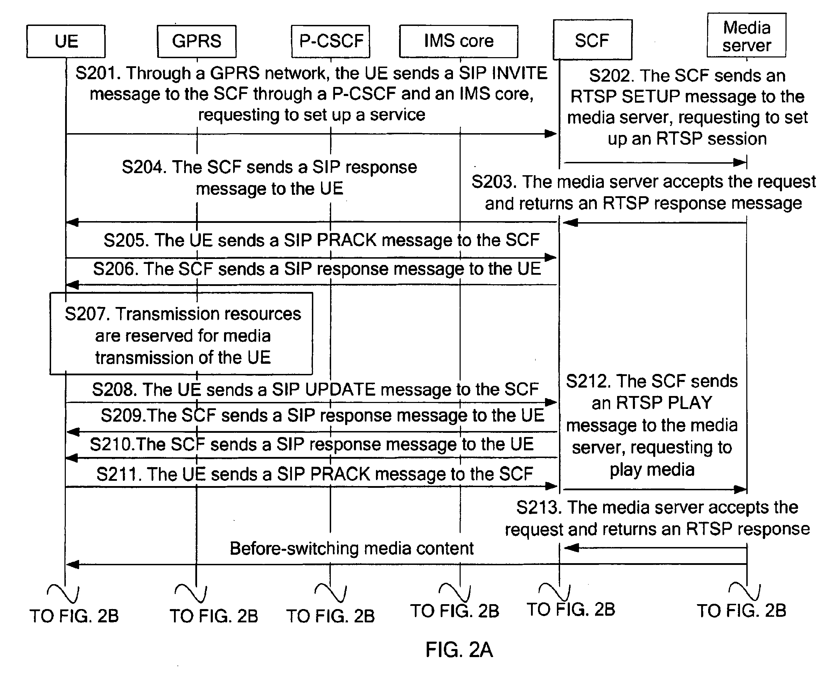

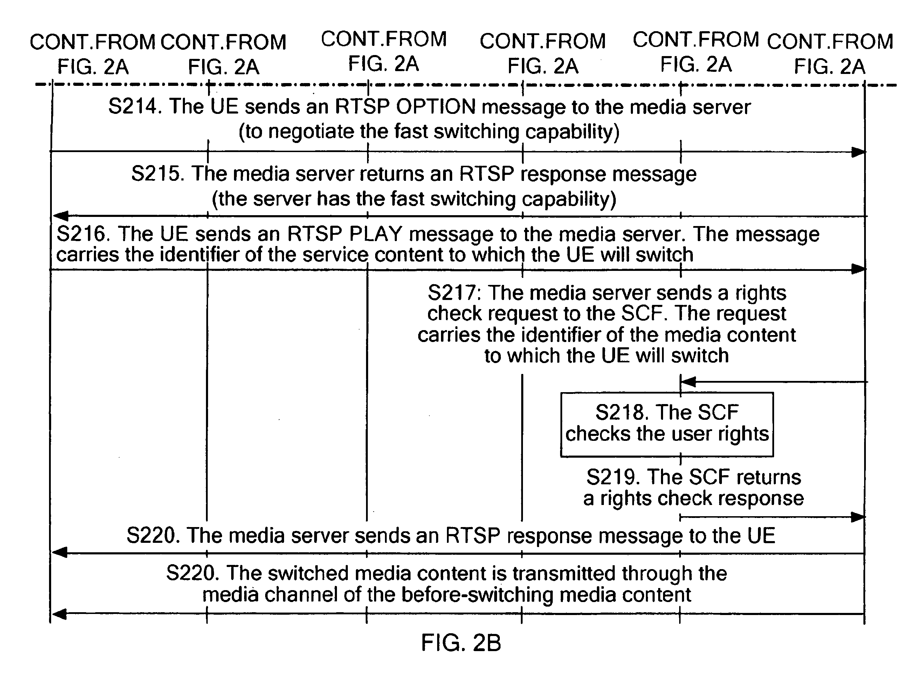

FIG. 2 is a flowchart of a method for switching a streaming service in the first embodiment of the present invention. In the first embodiment, the UE sends a switching request through the before-switching RTSP session between the UE and the media server, and finally, sends the content indicated in the switching request through the before-switching media channel. Details of this embodiment include the following steps:
Step S201: Through a General Packet Radio Service (GPRS) network, the UE sends a SIP INVITE message to the SCF through a Proxy Call Session Control Function (P-CSCF) and an IMS core, requesting to set up a service. The SIP INVITE message carries a media content identifier, IP address and port for receiving and transmitting media on the UE side, and codec information.
Step S202: The SCF sends an RTSP SETUP message to the media server, requesting to establish an RTSP session. The RTSP SETUP message carries a media content identifier, IP address and port for receiving and transmitting media on the UE side, and codec information.
Step S203: The media server accepts the request, and returns an RTSP response message such as 200 OK, and allocates an RTSP session identifier. The RTSP response message carries IP address and port for receiving and transmitting media on the media server side, and codec information.
Step S204: The SCF sends a SIP response message such as SIP 183 response message to the UE. The SIP response message carries IP address and port for receiving and transmitting media on the media server side, and codec information.
Step S205: The UE sends a SIP Provisional Response Acknowledgement (PRACK) message to the SCF.
Step S206: The SCF sends a SIP response message such as SIP 200 OK message to the UE.
Step S207: Transmission resources are reserved for media transmission of the UE.
Step S208: The UE sends a SIP UPDATE message to the SCF.
Step S209: The SCF sends a SIP response message such as SIP 200 OK message to the UE. Steps S204-S206 and steps S208-S209 are optional; and step S207 may occur at any time after step S201.
Step S210: The SCF sends a SIP response message such as 200 OK message to the UE.
Step S211: The UE sends a SIP Acknowledgement (ACK) message to the SCF.
Step S212: The SCF sends an RTSP PLAY message to the media server, requesting to play media.
Step S213: The media server accepts the request, returns an RTSP response message such as RTSP 200 OK, and starts to send media contents. Step S212 and step S213 may occur between the UE and the media server.

Now the service is set up between the UE and the network side, and the media server starts sending the contents to the UE. In this embodiment, the media server is a PSS server, or a Media Resource Function (MRF). The service setup process described above is only an example, and shall not be construed as limitation to the present invention. The streaming service switching method disclosed herein is independent of the specific mode of setting up the service.

Afterward, the UE sends a switching request to the media server, requesting to change the content being accessed. The media server and the SCF process the switching request, as detailed below:
Step S214: The UE sends an RTSP OPTION message to the media server to query the fast switching capability information of the media server.
Step S215: The media server returns an RTSP response message such as RTSP 200 OK message that carries the fast switching capability information of the media server. Step S214 and step S215 are optional. The operation of obtaining the fast switching capability information of the media server may be: before step S201, the content menu sent to the UE carries the fast switching capability information of the media server corresponding to the content in the content menu, or, any SIP message sent by the SCF to the UE carries the fast switching capability information of the media server, and the SCF may obtain the fast switching capability information of the media server from the media server through an RTSP OPTION message.
Step S216: The UE sends an RTSP PLAY message to the media server. The message carries the identifier of the media content to which the UE will switch.
Step S217: The media server sends a rights check request to the SCF. The request carries the identifier of the media content to which the UE will switch.
Step S218: The SCF checks the user rights.
Step S219: The SCF returns a rights check response.
Step S220: The media server sends an RTSP response message such as 200 OK message to the UE, and uses the before-switching media channel to transmit the switched media content.

Although the GPRS access is taken as an example in the first embodiment above, the present invention is applicable to other IP access scenarios, for example, Long Term Evolution (LTE), Wireless Local Area Network (WLAN), Worldwide Interoperability for Microwave Access (WiMAX) or Code Division Multiple Access (CDMA) 1X/DO.

In the first embodiment of the present invention, the UE sends a switching request to the media server through a before-switching RTSP session between the UE and the media server; the SCF performs rights checking on the switching request; and the media server uses the before-switching media channel to send the content requested in the switching request to the UE, thus switching the streaming service by using the fast switching capability of the real-time streams in an IMS architecture.

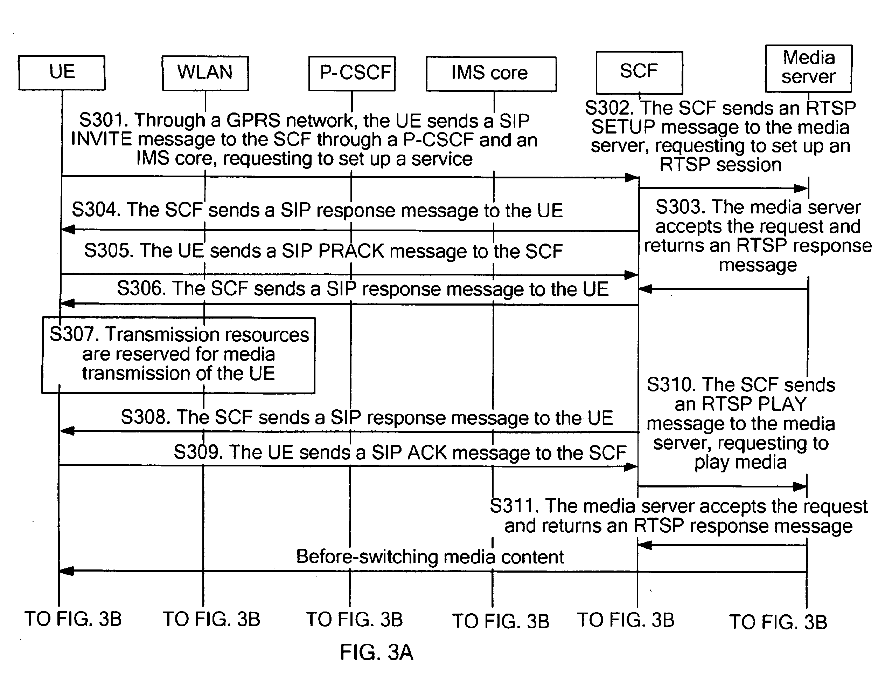

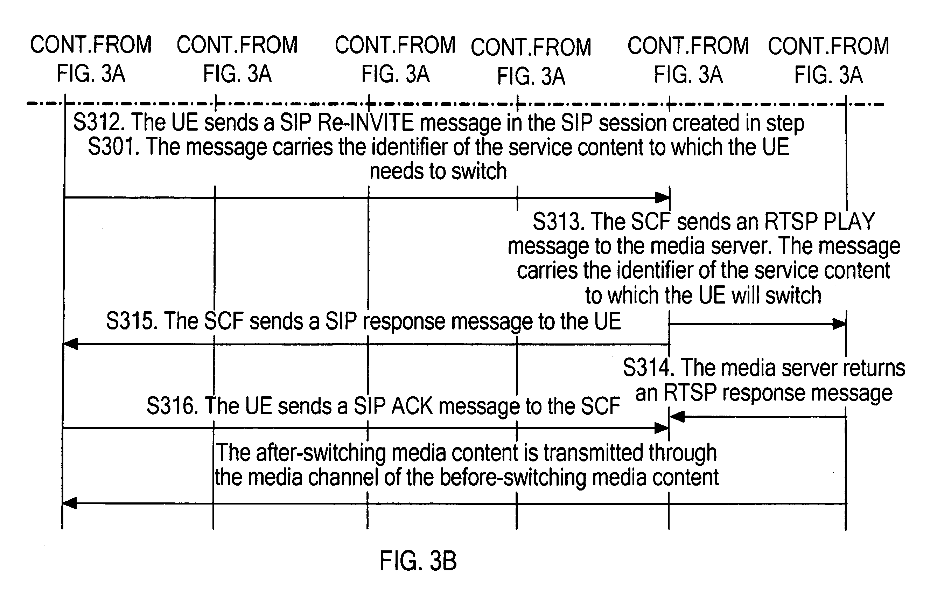

FIG. 3 is a flowchart of a method for switching a streaming service in the second embodiment of the present invention. In the second embodiment, the UE sends a switching request through the before-switching SIP session between the UE and the SCF, and finally, sends the content indicated in the switching request through the before-switching media channel. Details of this embodiment include:
Step S301: Through a WLAN network, the UE sends a SIP INVITE message to the SCF through a P-CSCF and an IMS core, requesting to set up a service. The SIP INVITE message carries a media content identifier, IP address and port for receiving and transmitting media on the UE side, and codec information.
Step S302: The SCF sends an RTSP SETUP message to the media server, requesting to establish an RTSP session. The RTSP SETUP message carries a media content identifier, IP address and port for receiving and transmitting media on the UE side, and codec information.
Step S303: The media server accepts the request, returns an RTSP response message such as RTSP 200 OK message, and allocates an RTSP session identifier. The RTSP response message carries IP address and port for receiving and transmitting media on the media server side, and codec information. After receiving the RTSP SETUP message from the SCF, the media server may check whether the user is entitled to access the content indicated in the SIP INVITE message; if so, the media server accepts the RTSP SETUP request, and returns an RTSP response message.
Step S304: The SCF sends a SIP response message such as SIP 183 response message to the UE. The SIP response message carries IP address and port for receiving and transmitting media on the media server side, and codec information.
Step S305: The UE sends a SIP PRACK message to the SCF.
Step S306: The SCF sends a SIP response message such as SIP 200 OK message to the UE. Steps S304-S306 are optional.
Step S307: Transmission resources are reserved for media transmission of the UE.
Step S308: The SCF sends a SIP response message such as SIP 200 OK message to the UE.
Step S309: The UE sends a SIP ACK message to the SCF.
Step S310: The SCF sends an RTSP PLAY message to the media server, requesting to play media.
Step S311: The media server accepts the request, returns an RTSP response message such as RTSP 200 OK, and starts to play media contents.

Now the service is set up between the UE and the network side, and the media server starts sending the contents to the UE. In this embodiment, the media server is a PSS server, or an MRF. The service setup process described above is only an example, and shall not be construed as limitation to the present invention. The streaming service switching method disclosed herein is independent of the specific mode of setting up the service.

Afterward, the UE sends a switching request to the SCF, requesting to change the content being accessed. The SCF processes the switching request, as detailed below:
Step S312: The UE sends a SIP Re-INVITE message in the SIP session created in step S301. The message carries the identifier of the media content to which the UE needs to switch. The identifier of the media content may be carried in a header field or in a message body.
Step S313: The SCF sends an RTSP PLAY message to the media server. The message carries the identifier of the media content to which the UE needs to switch. Before sending the RTSP PLAY message, the SCF may check whether the user is entitled to access the content indicated in the SIP Re-INVITE message; if so, the SCF sends the RTSP PLAY message.
Step S314: The media server returns an RTSP response message such as RTSP 200 OK message. If the SCF does not check the user rights in step S313, after receiving the RTSP PLAY message from the SCF, the media server may check whether the user is entitled to access the content indicated in the SIP Re-INVITE message first; if so, the media server accepts the RTSP PLAY request, and returns an RTSP response message.
Step S315: The SCF sends a SIP response message such as SIP 200 OK message to the UE.
Step S316: The UE sends a SIP ACK message to the SCF. Afterward, the media server uses the before-switching media channel to transmit the switched media content to the UE.

In the second embodiment of the present invention, if the switched content requires different bandwidth, the message sent in step S312 may carry media description information, keep the IP address and port unchanged, and update the bandwidth control parameter. Before step S313, the SCF sends the RTSP SETUP message to the media server, and the RTSP SETUP message carries the RTSP session identifier obtained in step S303. The media server returns an RTSP 200 OK success response message to update the bandwidth of the before-switching media channel between the media server and the UE. Such operations are followed by step S313. In this way, the before-switching transmission channel (without changing the IP address or port between the UE and the media server) and the RTSP session are made full use of, and the bandwidth of the media channel is adjusted according to the switched media content.

Although the second embodiment takes the WLAN access as an example, the technical solution described above is also applicable to other IP access scenarios such as GPRS, System Architecture Evolution (SAE) plus LTE.

In the second embodiment of the present invention, the UE sends a switching request through a before-switching SIP session between the UE and the SCF; the media server or the SCF checks whether the user is entitled to access the content indicated in the switching request; and the media server uses the before-switching media channel to send the switched content, thus switching the streaming service by using the fast switching capability of the real-time streams in an IMS architecture, and improving the switching speed and user experience.

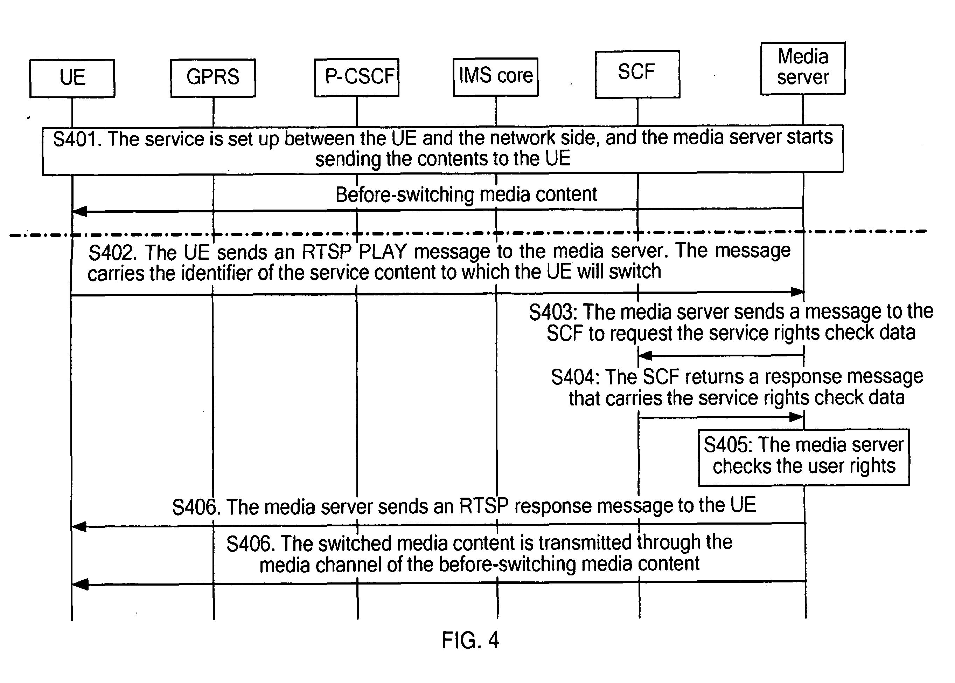

FIG. 4 is a flowchart of a method for switching a streaming service in the third embodiment of the present invention. In the third embodiment, the UE sends a switching request through the before-switching RTSP session between the UE and the media server, and finally, sends the content indicated in the switching request through the before-switching media channel. Details of this embodiment include the following steps:
Step S401: The service is set up between the UE and the network side, and the media server starts sending the contents to the UE. The mode of setting up a service between the UE and the network side is the same as that in the first embodiment or the second embodiment. However, this embodiment is not limited to such a mode of setting up the service. The streaming service switching method disclosed in this embodiment is independent of the specific mode of setting up the service.

Afterward, the UE sends a switching request to the media server, requesting to change the content being accessed. The media server and the SCF control the switching, as detailed below:
Step S402: The UE sends an RTSP PLAY message to the media server. The message carries the identifier of the media content to which the UE will switch.
Step S403: The media server sends a message to the SCF to request the service rights check information. The SCF may be replaced with another functional entity for storing service subscription data.
Step S404: The SCF returns a response message that carries the service rights check information. The SCF may be replaced with another functional entity for storing service subscription data.
Step S403 and step S404 are optional. The service rights check information may be pushed by the SCF or another functional entity for storing service subscription data to the media server directly. The pushing operation may occur at any time after the user subscribes to the service. The service rights check information may be stored in the media server directly so that the media server does not need to obtain the information from other functional entities.
Step S405: The media server checks the user rights.
Step S406: The media server sends an RTSP response message such as RTSP 200 OK to the UE, and sends the after-switching media streams.

In the third embodiment of the present invention, the UE sends a switching request through a before-switching RTSP session between the UE and the media server; the media server checks whether the user is entitled to access the content indicated in the switching request; and the media server uses the before-switching media channel to send the content indicated in the switching request, thus switching the streaming service by using the fast switching capability of the real-time streams in an IMS architecture, and improving the switching speed and user experience.

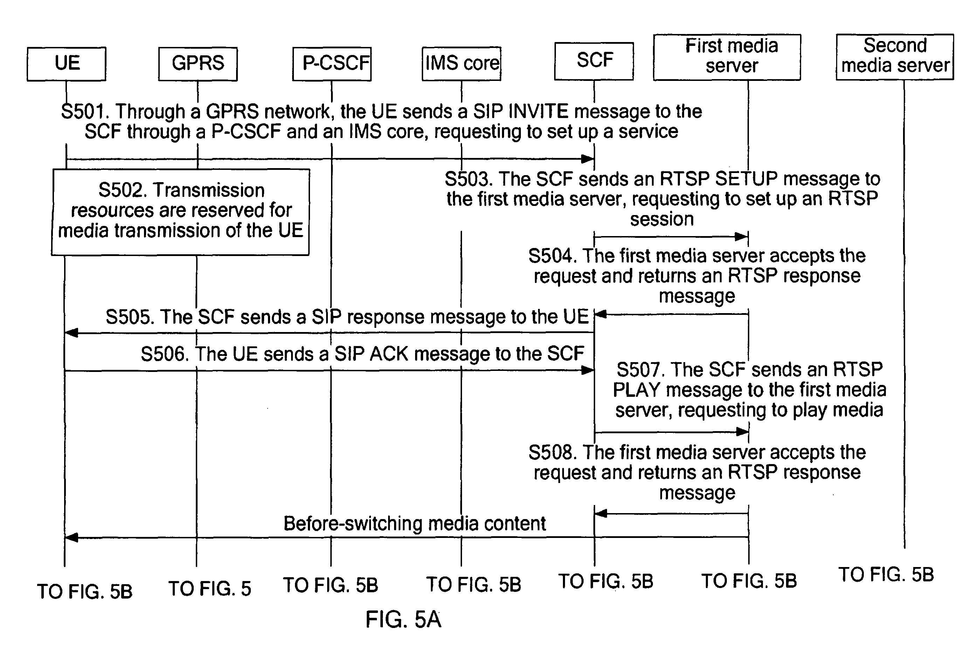

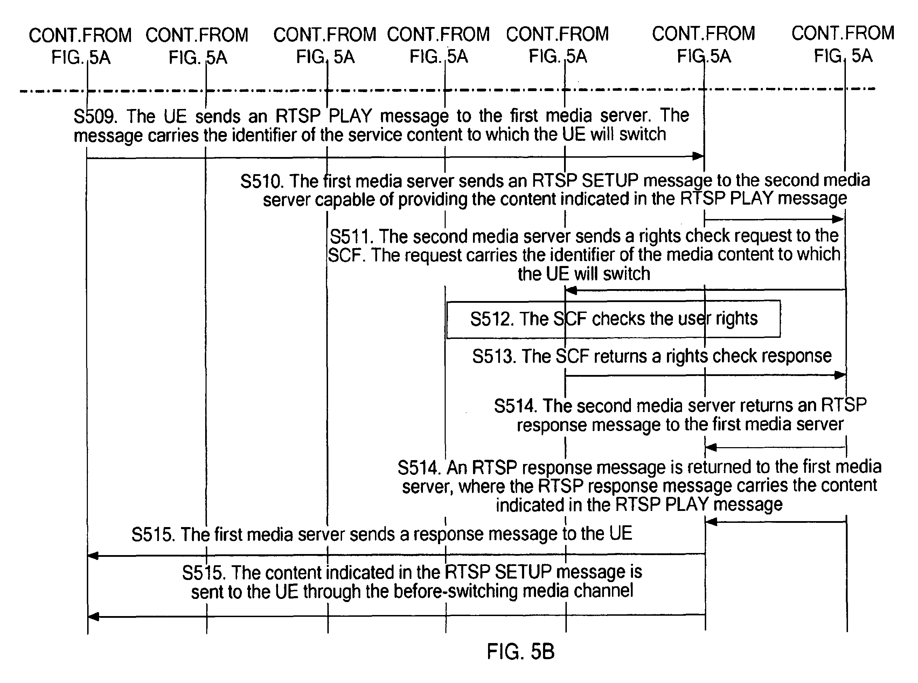

FIG. 5 is a flowchart of a method for switching a streaming service in the fourth embodiment of the present invention. The fourth embodiment deals with a switching method in the case that the before-switching media content and the switched media content exist on different media servers. The method includes the following steps:
Step S501: Through a GPRS network, the UE sends a SIP INVITE message to the SCF through a P-CSCF and an IMS core, requesting to set up a service. The SIP INVITE message carries a media content identifier, IP address and port for receiving and transmitting media on the UE side, and codec information.
Step S502: Transmission resources are reserved for media transmission of the UE.
Step S503: The SCF sends an RTSP SETUP message to the first media server, requesting to establish an RTSP session. The RTSP SETUP message carries a media content identifier, IP address, and port for receiving and transmitting media on the UE side, and codec information.
Step S504: The first media server accepts the request, returns an RTSP response message such as RTSP 200 OK message, and allocates an RTSP session identifier. The RTSP response message carries IP address and port for receiving and transmitting media on the media server side, and codec information.
Step S505: The SCF sends a SIP response message such as SIP 200 OK message to the UE.
Step S506: The UE sends a SIP ACK message to the SCF.
Step S507: The SCF sends an RTSP PLAY message to the first media server, requesting to play media.
Step S508: The first media server accepts the request, returns an RTSP response message such as RTSP 200 OK, and starts to send media contents.

Now the service is set up between the UE and the network side, and the media server starts sending the media contents to the UE. In this embodiment, the media server is a PSS server, or an MRF. The service setup process described above is only an example, and shall not be construed as limitation to the present invention. The streaming service switching method disclosed herein is independent of the specific mode of setting up the service.

Afterward, the UE sends a switching request to the SCF, requesting to change the content being accessed. The SCF processes the switching request, as detailed below:
Step S509: The UE sends an RTSP PLAY message to the first media server. The message carries the identifier of the media content to which the UE will switch.
Step S510: The first media server sends an RTSP SETUP message to the second media server capable of providing the content indicated in the RTSP PLAY message.
Step S511: The second media server sends a rights check request to the SCF. The request carries the identifier of the media content to which the UE will switch.
Step S512: The SCF checks the user rights.
Step S513: The SCF returns a rights check response.
Step S514: The second media server returns an RTSP response message such as RTSP 200 OK message to the first media server. The RTSP response message carries the content indicated in the RTSP PLAY message.
Step S515: The first media server sends a response message such as RTSP 200 OK message to the UE, and uses the before-switching media channel to send the content indicated in the RTSP PLAY message to the UE.

In the fourth embodiment, the first media server and the second media server may use other modes such as FTP mode instead of the RTSP mode to transmit the content indicated in the switching request.

In the fourth embodiment of the present invention, if the before-switching media content and the switched media content exist on different media servers, the SCF checks whether the user is entitled to access the content indicated in the switching request. The first media server obtains the switched media content from the second media server capable of providing the switched media content, and uses the before-switching media channel to send the switched media content to the UE, thus switching the streaming service in the IMS architecture, and improving the switching speed and user experience.

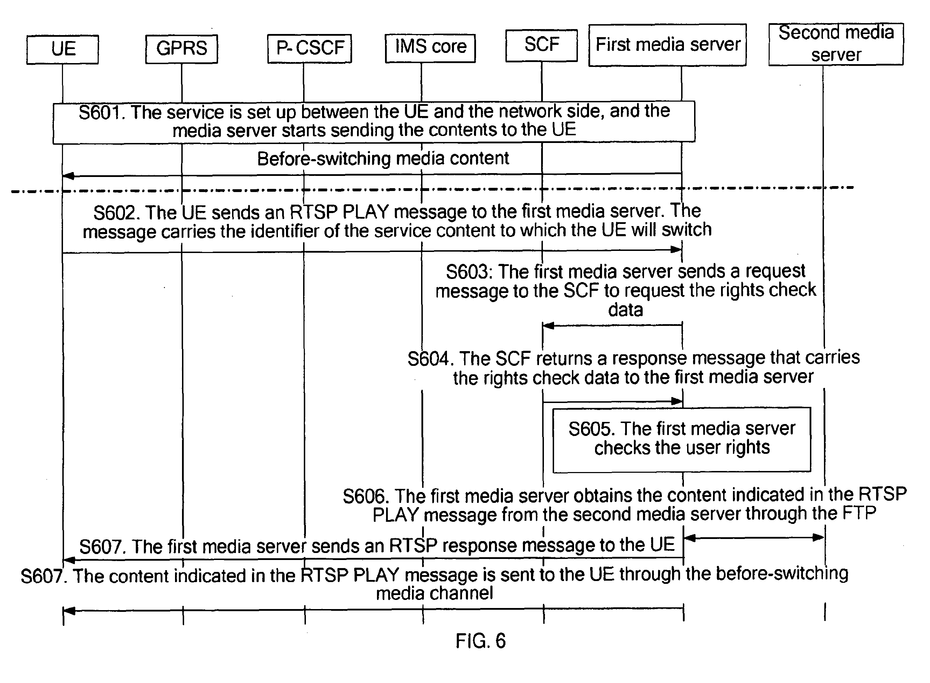

FIG. 6 is a flowchart of a method for switching a streaming service in the fifth embodiment of the present invention. The fifth embodiment deals with a switching method in the case that the before-switching media content and the switched media content exist on different media servers. The method includes the following steps:
Step S601: The service is set up between the UE and the network side, and the media server starts sending the contents to the UE. The mode of setting up a service between the UE and the network side is the same as that in the fourth embodiment. However, this embodiment is not limited to such a mode of setting up the service. The streaming service switching method disclosed in this embodiment is independent of the specific mode of setting up the service.

The UE sends a switching request to the media server, requesting to change the content being accessed. The media server and the SCF handle the switching, as detailed below:
Step S602: The UE sends an RTSP PLAY message to the first media server. The message carries the identifier of the media content to which the UE will switch.
Step S603: The first media server sends a request message to the SCF to request the rights check information.
Step S604: The SCF returns a response message that carries the rights check information to the first media server.
Step S605: The first media server checks the user rights.
Step S606: The first media server obtains the content indicated in the RTSP PLAY message from the second media server through the FTP.
Step S607: The first media server sends an RTSP response message such as RTSP 200 OK message to the UE, and uses the before-switching media channel to send the content indicated in the RTSP PLAY message to the UE.

In the fifth embodiment of the present invention, if the before-switching media content and the switched media content exist on different media servers, the first media server checks whether the user is entitled to access the content indicated in the switching request; and the first media server obtains the switched media content from the second media server capable of providing the switched media content, and uses the before-switching media channel to send the switched media content to the UE, thus improving the switching speed and user experience in contrast to the switching method which sets up a completely new service.

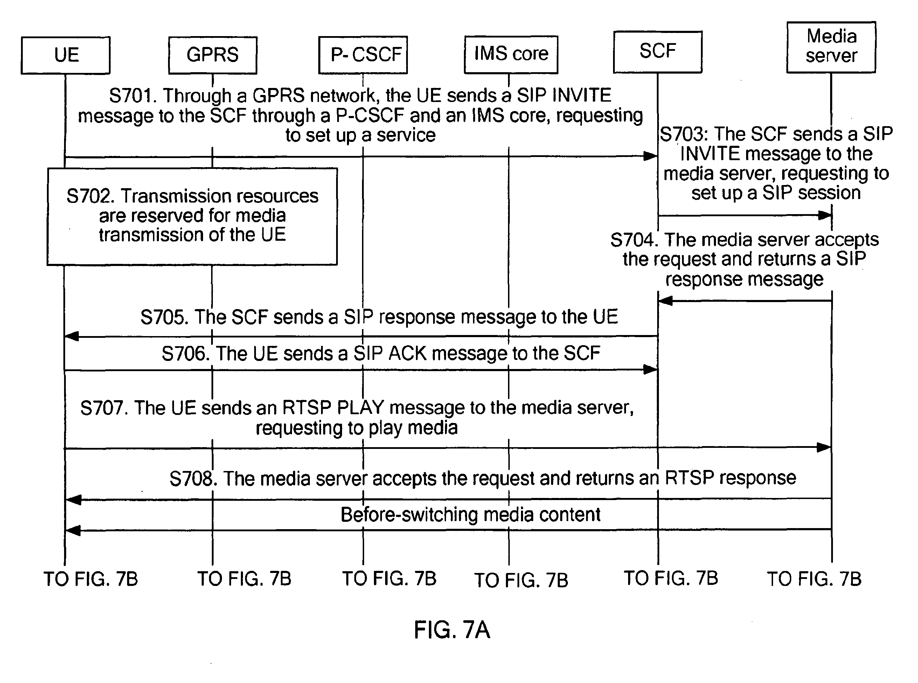

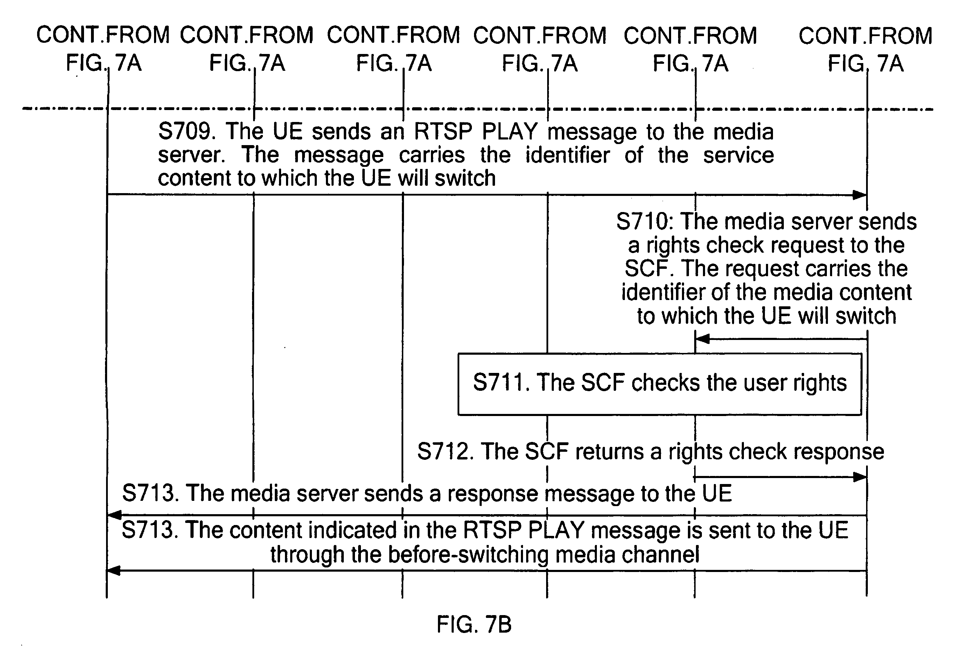

FIG. 7 is a flowchart of a method for switching a streaming service in the sixth embodiment of the present invention. In the sixth embodiment, the interface between the SCF and the media server is a SIP interface instead of the RTSP interface. The method includes the following steps:
Step S701: Through a GPRS network, the UE sends a SIP INVITE message to the SCF through a P-CSCF and an IMS core, requesting to set up a service. The SIP INVITE message carries a media content identifier, IP address, and port for receiving and transmitting media on the UE side, and codec information.
Step S702: Transmission resources are reserved for media transmission of the UE.
Step S703: The SCF sends a SIP INVITE message to the media server, requesting to establish a SIP session. The SIP INVITE message carries a media content identifier, IP address and port for receiving and transmitting media on the UE side, and codec information.
Step S704: The media server accepts the request, returns a SIP response message such as RTSP 200 OK message, and allocates an RTSP session identifier. The RTSP response message carries IP address and port for receiving and transmitting media on the media server side, and codec information.
Step S705: The SCF sends a SIP response message such as SIP 200 OK message to the UE.
Step S706: The UE sends a SIP ACK message to the SCF.
Step S707: The UE sends an RTSP PLAY message to the media server, requesting to play media.
Step S708: The media server accepts the request, returns an RTSP response message such as RTSP 200 OK, and starts to send media contents.

Now the service is set up between the UE and the network side, and the media server starts sending the media contents to the UE. In this embodiment, the media server is a PSS server, or an MRF. The service setup process described above is only an example, and shall not be construed as limitation to the present invention. The streaming service switching method disclosed herein is independent of the specific mode of setting up the service.

Afterward, the UE sends a switching request to the SCF, requesting to change the content being accessed. The SCF processes the switching request, as detailed below:
Step S709: The UE sends an RTSP PLAY message to the media server. The message carries the identifier of the media content to which the UE will switch.
Step S710: The media server sends a rights check request such as SIP INFO message to the SCF. The rights check request carries the identifier of the media content to which the UE will switch.
Step S711: The SCF checks the user rights.
Step S712: The SCF returns a rights check response.
Step S713: The media server sends a response message such as RTSP 200 OK message to the UE, and uses the before-switching media channel to send the content indicated in the RTSP PLAY message to the UE.

In the sixth embodiment of the present invention, information is exchanged between the SCF and the media server through a SIP interface; the SCF performs rights checking on the switching request; the media server uses the before-switching media channel to send the switched media content to the UE, thus switching the streaming service in the IMS architecture, and improving the switching speed and user experience in contrast to the switching method which sets up a completely new service.

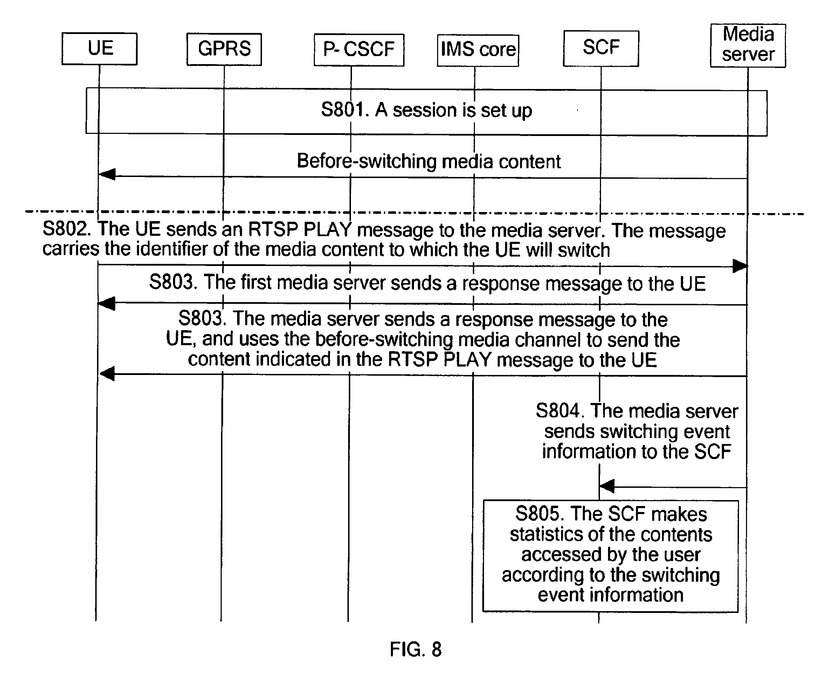

FIG. 8 is a flowchart of a method for switching a streaming service in the seventh embodiment of the present invention. The method includes the following steps:
Step S801: A session is established, and the before-switching media content is received. The process of establishing a session is the same as steps S701-S708 in the sixth embodiment.

Afterward, the UE sends a switching request to the SCF, requesting to change the content being accessed. The SCF handles the switching request, as detailed below:
Step S802: The UE sends an RTSP PLAY message to the media server. The message carries the identifier of the media content to which the UE will switch.
Step S803: The media server sends a response message such as RTSP 200 OK message to the UE, and uses the before-switching media channel to send the content indicated in the RTSP PLAY message to the UE.
Step S804: The media server sends switching information to the SCF.

Optionally, after receiving the switching information, the media server sends a response message to the SCF.

Step S805: The SCF makes statistics of the contents accessed by the user according to the switching information.

In the seventh embodiment, the media server sends switching information to the SCF so that the service provider can make statistics of the contents accessed by the user. According to the switching information interaction mechanism, the service provider can perform other operations such as switching statistics (statistics about the frequency of switching, number of times of accessing the content, and time of accessing the content), or perform charging for the new content accessed by the user after switching.

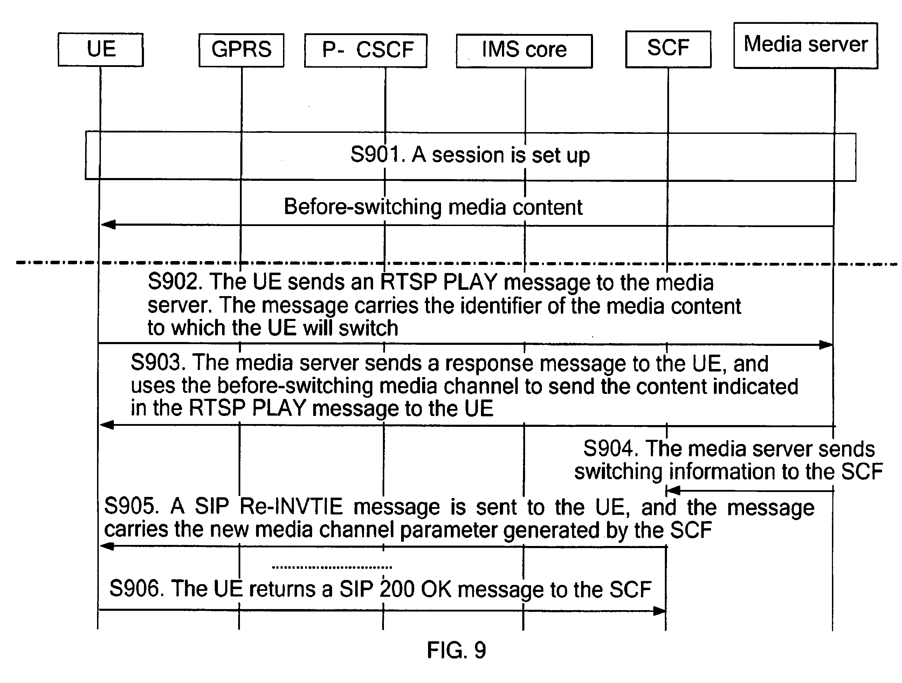

FIG. 9 is a flowchart of a method for switching a streaming service in the eighth embodiment of the present invention. The method includes the following steps:
Step S901: A session is established, and the before-switching media content is received. The process of establishing a session is the same as steps S701-S708 in the sixth embodiment.

Afterward, the UE sends a switching request to the SCF, requesting to change the content being accessed. The SCF handles the switching request, as detailed below:
Step S902: The UE sends an RTSP PLAY message to the media server. The message carries the identifier of the media content to which the UE will switch. The media content identifier may be the identifier of the whole content, or an identifier of the media component. In this embodiment, the bandwidth required for transmitting the media content to be switched by the UE is higher than the bandwidth required for transmitting the before-switching media content.
Step S903: The media server sends a response message such as RTSP 200 OK message to the UE, and uses the before-switching media channel to send the content indicated in the RTSP PLAY message to the UE.
Step S904: The media server sends switching information to the SCF. The switching information includes at least one of: identifier of target content of switching, identifier of the target component of switching, user information, identifier of source content of switching, identifier of the source component, substitution relation between before-switching media and after-switching media, mapping relation between the before-switching component and the after-switching component, mapping relation between the media channel and the before-switching media component, mapping relation between the media channel and the after-switching media component, and parameters of the transmission channel required by the content or component.
Step S905: The SCF generates new media channel parameters (for example, bandwidth), and sends a SIP Re-INVTIE message that carries the parameters to the UE. The parameters may also be carried in a SIP UPDATE message.
Step S906: The UE returns a SIP 200 OK message to the SCF.

By negotiating media with the UE and reserving resources for the before-switching media stream channel again, the SCF can control modification of the before-switching media stream channel, increase the bandwidth, and better support transmission of the after-switching media streams.

In the eighth embodiment of the present invention, the media server sends switching information to the SCF so that the service provider can modify the media stream channel, increase the bandwidth to support switching to the content of higher quality (video quality and audio quality, which generally require higher bandwidth). Moreover, in the same way, the service provider enables the user to switch to the content of lower quality to reduce the bandwidth or other indices (such as delay) of the media channel; and the service provider supports increase or release of the media stream channel as a result of increasing or decreasing the media components (namely, any voice, video or data) of the media content.

In the eighth embodiment, the media server includes an adaptor and a PSS server. In this case, the switching information is sent by the adaptor to the SCF. The switching information may be carried in a SIP INFO message. However, the embodiments of the present invention are not limited to that. In the case that the media channel needs to be modified after switching, the switching information may be carried in a SIP ReINVITE message or an UPDATE message sent by the media server or adaptor, and the media channel is modified through a SIP media renegotiation mechanism.

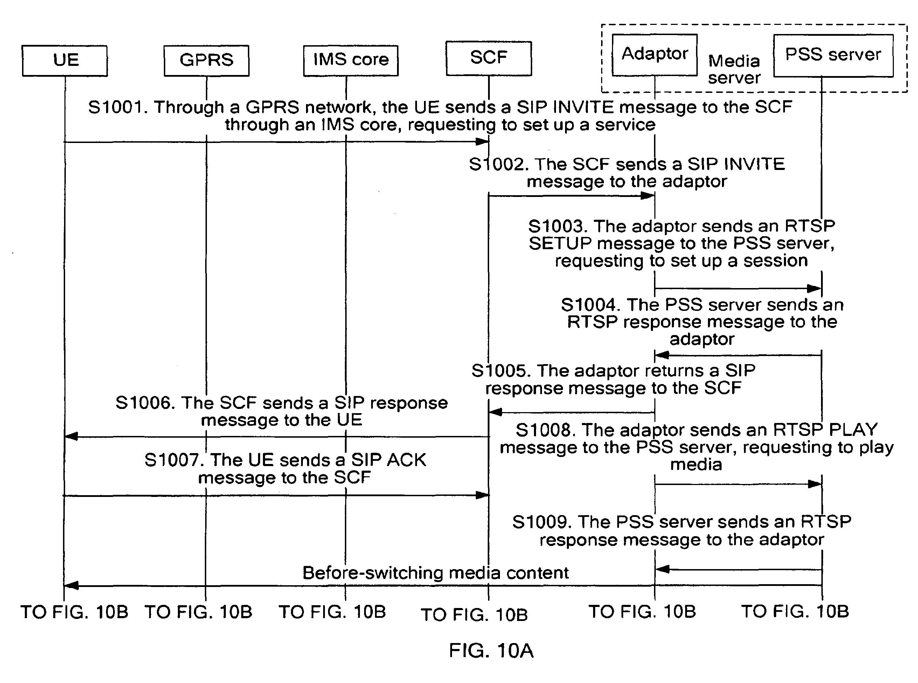

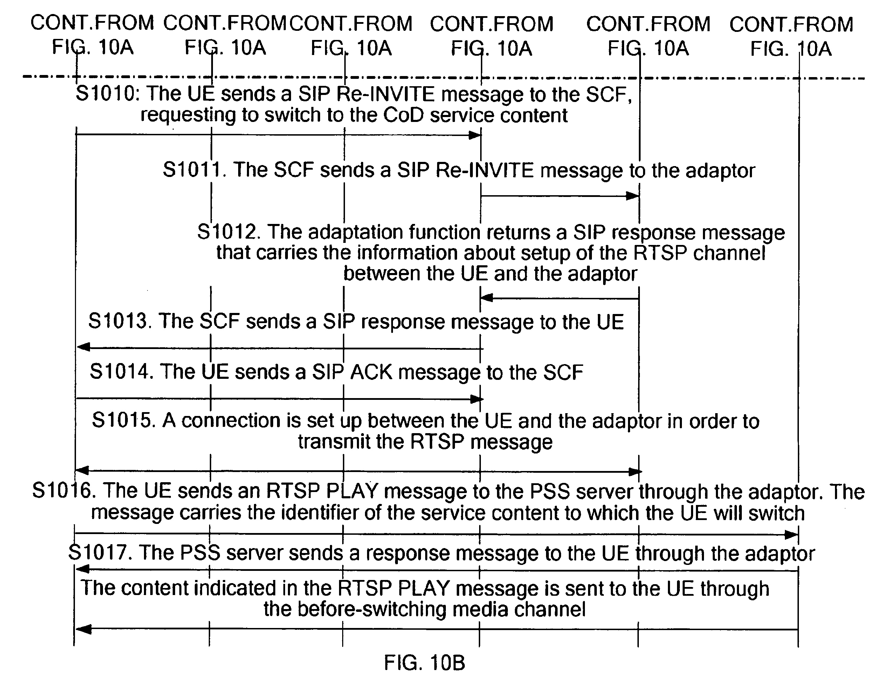

FIG. 10 is a flowchart of a method for switching a streaming service in the ninth embodiment of the present invention. In this embodiment, the media server may be implemented on the adaptor and the PSS server. The adaptor is connected with the PSS server and the UE. Therefore, the information exchanged between the UE and the PSS server passes through the adaptor, and the information exchanged between the PSS server and the SCF passes through the adaptor.

Details of this embodiment include the following steps:
Step S1001: Through a GPRS network, the UE sends a SIP INVITE message to the SCF through an IMS core, requesting to set up a service.
Step S1002: The SCF sends a SIP INVITE message to the adaptor.
Step S1003: The adaptor sends an RTSP SETUP message to the PSS server, requesting to establish a session.
Step S1004: The PSS server sends an RTSP response message to the adaptor.
Step S1005: The adaptor returns a SIP response message to the SCF.
Step S1006: The SCF sends a SIP response message such as SIP 200 OK message to the UE.
Step S1007: The UE sends a SIP ACK message to the SCF.
Step S1008: The adaptor sends an RTSP PLAY message to the PSS server, requesting to play media.
Step S1009: The PSS server sends an RTSP response message to the adaptor.

Now a service is set up between the UE and the network side, and the media server starts to send media contents to the UE. The media contents may be sent through User Datagram Protocol (UDP) or Transport Control Protocol (TCP), but no RTSP channel is set up between the UE and the adaptor. The service setup process described above is only an example, and shall not be construed as limitation to the embodiments of the present invention.

Afterward, the UE sends a switching request to the SCF, requesting to change the content being accessed. The SCF handles the switching request, as detailed below:
Step S1010: The UE sends a SIP Re-INVITE message to the SCF, requesting to switch to the CoD service content.
Step S1011: The SCF sends a SIP Re-INVITE message to the adaptor.
Step S1012: The adaptation function returns a SIP response message that carries the information about setup of the RTSP channel between the UE and the adaptor, for example, IP address.
Step S1013: The SCF sends a SIP response message to the UE.
Step S1014: The UE sends a SIP ACK message to the SCF.
Step S1015: A connection is set up between the UE and the adaptor in order to transmit the RTSP message.
Step S1016: The UE sends an RTSP PLAY message to the PSS server through the adaptor. The message carries the identifier of the service content to which the UE will switch.
Step S1017: The PSS server sends a response message to the UE through the adaptor. Now the UE starts to receive the switched contents.

In the ninth embodiment of the present invention, no RTSP channel is set up between the before-switching UE and the network side. By setting up an RTSP channel through SIP at the time of switching, the UE can switch the content through the RTSP.

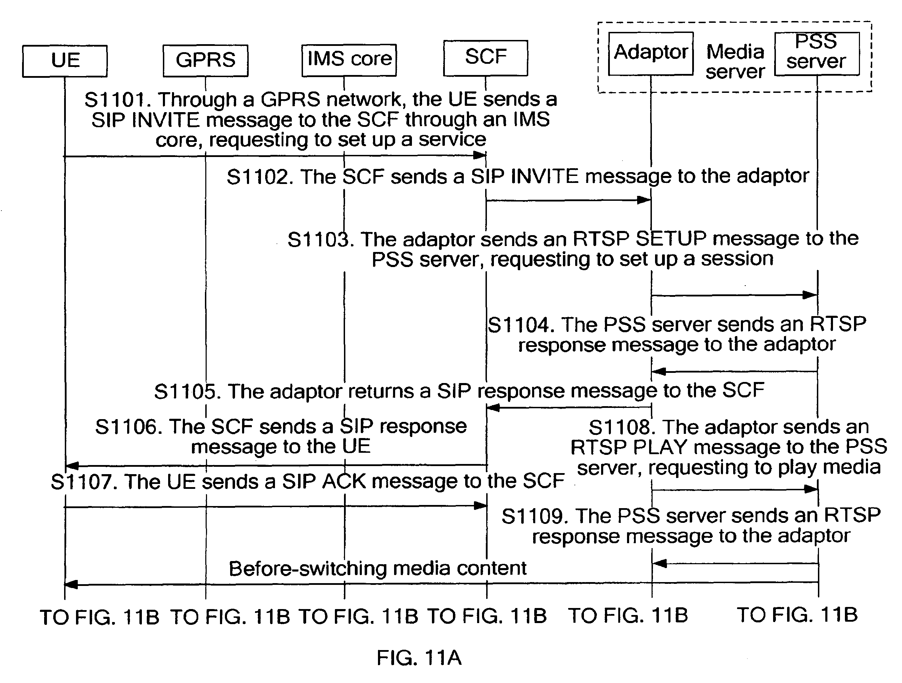

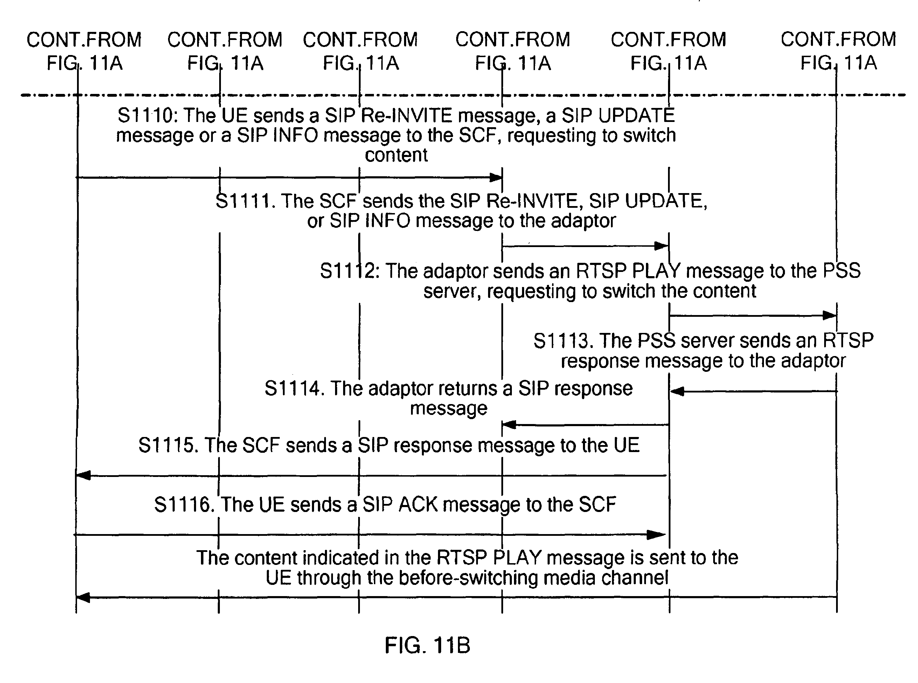

FIG. 11 is a flowchart of a method for switching a streaming service in the 10th embodiment of the present invention. The method includes the following steps:
Steps S1101-S1109 are the same as steps S1001-S1009.

Now the service is set up between the UE and the network side, and the media server starts sending the media contents to the UE. The service setup process described above is only an example, and shall not be construed as limitation to the embodiments of the present invention.

Afterward, the UE sends a switching request to the SCF, requesting to change the content being accessed. The SCF handles the switching request, as detailed below:
Step S1110: The UE sends a SIP Re-INVITE message, or a SIP UPDATE message, or a SIP INFO message to the SCF, requesting to switch the content. The message includes at least one of: identifier of target content of switching, identifier of the target component of switching, user information, identifier of source content of switching or identifier of the source component, substitution relation between before-switching media and after-switching media, mapping relation between the before-switching component and the after-switching component, mapping relation between the media channel and the before-switching media component, mapping relation between the media channel and the after-switching media component, and indication of reusing the before-switching media channel.
Step S1111: The SCF sends a SIP Re-INVITE message, or a SIP UPDATE message, or a SIP INFO message to the adaptor. The message may include at least one of: identifier of target content of switching, identifier of the target component of switching, user information, identifier of source content of switching or identifier of the source component, substitution relation between before-switching media and after-switching media, mapping relation between the before-switching component and the after-switching component, mapping relation between the media channel and the before-switching media component, mapping relation between the media channel and the after-switching media component, and indication of reusing the before-switching media channel.
Step S1112: The adaptor sends an RTSP PLAY message to the PSS server, requesting to switch the content.
Step S1113: The PSS server sends an RTSP response message to the adaptor. The PSS server starts using the before-switching media transmission channel to provide the switched content for the user.
Step S1114: The adaptor returns a SIP response message.
Step S1115: The SCF sends a SIP response message to the UE.
Step S1116: The UE sends a SIP ACK message to the SCF.

In the 10^{th} embodiment of the present invention, the UE requests the switching content through SIP, and the adaptor converts the SIP switching request into an RTSP switching request in order to accomplish the switching. In this embodiment, if the PSS server has generated at least one of: the media description information, synchronization source information, and information about the media component switched successfully, such information may be delivered by the adaptor and/or the SCF to the UE.

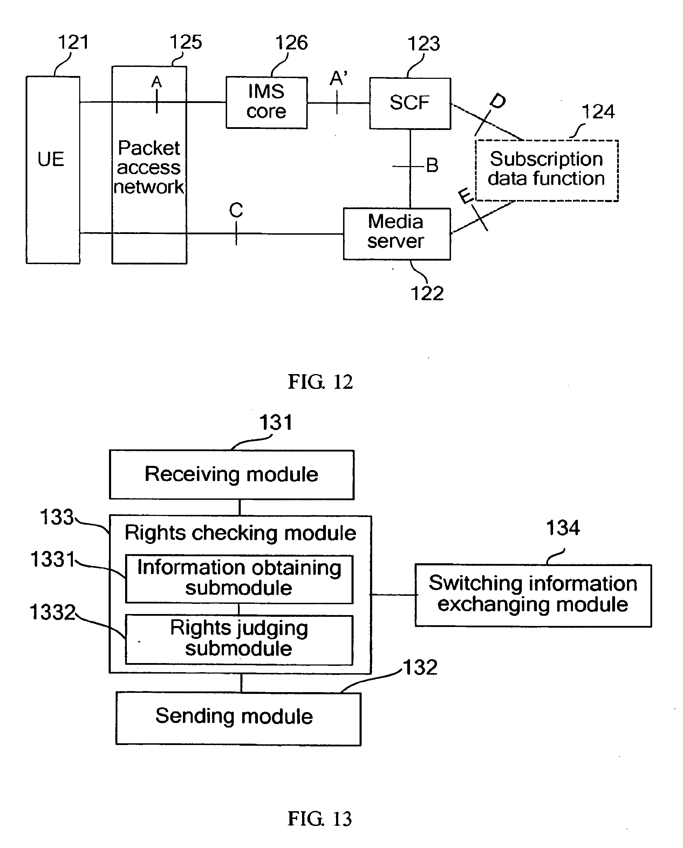

FIG. 12 shows a structure of a system for switching a streaming service in an embodiment of the present invention. The system includes:
a UE 121, adapted to set up a service through the IMS, receive media contents, and send a switching request that carries an identifier of requested media; and
a media server 122, adapted to: transmit media contents to the UE 121, receive the switching request sent by the UE 121, or receive the switching request or instruction sent by an SCF after the SCF receives the switching request sent by the UE 121, and use a media channel of before-switching media content to send switched media content to the UE 121. In this embodiment, the media server 122 may be at least one of a PSS server, or an MRF, and combination.

The system for switching a streaming service further includes: an SCF 123, adapted to: control the streaming service switching, and control or participate in operations such as adding, modifying or releasing the media channel according to the switching information sent by the media server 122, or perform statistics or charging.

The system for switching a streaming service may further include: a subscription data function 124, adapted to store media content subscription information of the user. The subscription data function 124 may be a stand-alone entity, or integrated in the SCF 123 and/or the media server 122.

The system for switching a streaming service may further include: a packet access network 125 and an IMS core 126.

The packet access network 125 may include: Global System for Mobile communications (GSM) Packet Switch (PS), Universal Mobile Telecommunications System (UMTS) PS, WLAN, LTE, CDMA1x/DO or WiMAX.

The IMS core 126 may include: P-CSCF, Interrogating Call Server Control Function (I-CSCF), Serving Call Server Control Function (S-CSCF) or Home Subscriber Server (HSS).

The system for switching a streaming service further includes: interface A, interface A', interface B, interface C, interface D, and interface E.

Interface A exists between the UE and the P-CSCF in the IMS; interface A' exists between the Call Server Control Function (CSCF) and the AS, and both are based on the SIP protocol.

Interface B exists between the SCF 123 and the media server 122, and may be based on the RTSP/SIP protocol.

Interface C is an optional stream control interface for transmitting media contents between the media server 122 and the UE 121. The content transmission may be based on Real-time Transport Protocol (RTP), or Real-time Transport Control Protocol (RTCP); and the stream control may be based on RTSP.

Interface D exists between the subscription data function 124 and the SCF 123, and may be based on the Diameter protocol.

Interface E exists between the subscription data function 124 and the media server 122, and may be based on the Diameter protocol.

In the system for switching a streaming service above, the media server 122 receives the switching request from the UE 121 or the switching request or instruction from the SCF 123, and sends the switched media content to the UE 121 through the before-switching media channel. At the time of switching, the SCF 123 can handle the service of switching. In this way, the system transmits the switched media content through the before-switching media channel in the IMS architecture, adjusts the media channel at the time of switching according to the requirement of transmitting the after-switching media, and performs statistics or charging for the switching, thus improving the switching speed, user experience, and network capability of controlling the switching.

FIG. 13 shows a structure of a media server in an embodiment of the present invention. The media server includes:
a receiving module 131, adapted to receive a switching request sent by a UE 121 directly, or receive a switching request or instruction sent by an SCF 123 after the SCF receives the switching request sent by the UE 121; and
a sending module 132, adapted to use a before-switching media channel to send switched media content to the UE 121.

The media server may further include:
a rights checking module 133, adapted to perform rights checking on the switching request received by the receiving module 131, or check the rights by proxy.

The rights checking module 133 may include:
an information obtaining submodule 1331, adapted to obtain rights check information; and
a rights judging submodule 1332, adapted to judge whether the UE is entitled to access the media content requested in the switching request according to the rights check information obtained by the information obtaining submodule 1331.

The media server may further include:
a switching information exchanging module 134, adapted to: transmit switching information to the SCF 123, where the switching information includes at least one of: identifier of target content of switching, identifier of the target component of switching, user information, identifier of source content of switching, identifier of the source component, substitution relation between before-switching media and after-switching media, mapping relation between the before-switching component and the after-switching component, mapping relation between the media channel and the before-switching media component, mapping relation between the media channel and the after-switching media component, and parameters of the transmission channel required by the content or component.

In the media server above, the receiving module 131 receives the switching request from the UE 121, and the sending module 132 sends the switched media content to the UE through the before-switching media channel, thus switching the streaming service by using the fast switching capability of the real-time streams in the IMS architecture, and improving the switching speed and user experience in contrast to the switching method which sets up a completely new service. Meanwhile, the switching information exchanging module 134 sends switching information to the SCF 123, and therefore, the SCF can adjust the channel for switching and perform statistics or charging, thus improving the network capability of controlling the switching.

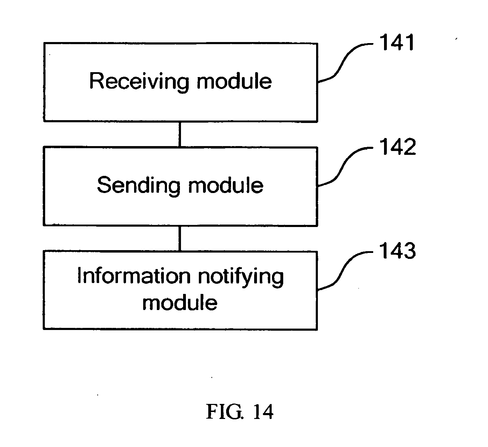

FIG. 14 shows a structure of an SCF in an embodiment of the present invention. The SCF includes:
a receiving module 141, adapted to receive the switching request sent by the UE 121;
a sending module 142, adapted to send a switching request to the media server 122, where the switching request requests or instructs the media server 122 to send the switched media content to the UE 121 through the before-switching media channel; and
an information notifying module 143, adapted to send to the UE 121 media description information, synchronization source information, or information about the media component switched successfully, or any combination thereof, where the information is generated by the media server 122.

After reading the foregoing embodiments, those skilled in the art are clearly aware that the present invention may be implemented through hardware, or through software in addition to a necessary universal hardware platform. The technical solution under the present invention may be embodied as a software product. The software product may be stored in a non-volatile storage medium (such as CD-ROM, USB flash disk, or mobile hard disk), and may include several instructions that enable a computer device (such as personal computer, server, or network device) to perform the methods specified in any embodiment of the present invention.

The above descriptions are merely preferred embodiments of the present invention, but are not intended to limit the present invention.

## Claims

1. A method for switching a streaming service in an IP Multimedia Subsystem, IMS , architecture, comprising:
receiving (101), by a media server, a switching request that carries an identifier of requested media from a User Equipment UE or a Service Control Function SCF (123) after the SCF receives the switching request sent by the UE (121) ; and
using (102), by the media server, a before-switching media channel to send switched media content to the UE;
wherein the media server sends switching information to the SCF, and the SCF handles services according to the switching information;
the media server comprises an adaptor and a Packet Switched Streaming service PSS server; and
the sending by the media server of the switching information to the SCF comprises: by the adaptor, sending the switching information to the SCF;
wherein the switching information comprises at least one of: identifier of target content of switching, identifier of a target component of switching, user information, identifier of source content of switching, identifier of a source component, substitution relation between before-switching media and after-switching media, mapping relation between a before-switching component and an after-switching component, mapping relation between a media channel and a before-switching media component, mapping relation between the media channel and a after-switching media component, and parameters of a transmission channel required by the content or component.

2. The method for switching a streaming service according to claim 1, wherein the handling of services by the SCF according to the switching information comprises:
by the SCF, performing service statistics according to the switching information;
or
performing charging according to the switching information; or
participating in modifying, adding, or releasing a media channel according to the switching information to meet requirements of transmitting the switched media content.

3. The method for switching a streaming service according to claim 1, wherein after receiving the switching request, the method further comprises:
by the adaptor, sending the switching request to the PSS server, and using the before-switching media channel to send the switched media content.

4. The method for switching a streaming service according to claim 1, wherein: if the switching request is sent by the UE to the SCF and the SCF requests or instructs the media server to perform switching, the switching request comprises at least one of:
identifier of target content of switching, identifier of a target component of switching, user information, identifier of source content of switching, identifier of a source component, substitution relation between before-switching media and after-switching media, mapping relation between a before-switching component and an after-switching component, mapping relation between a media channel and a before-switching media component, mapping relation between the media channel and a after-switching media component, and indication of reusing the before-switching media channel.

5. The method for switching a streaming service according to claim 1, wherein:
the media server comprises an adaptor and a Packet Switched Streaming service PSS server; and
the requesting or instructing by the SCF of the media server to perform switching and use the before-switching media channel to send the switched media content comprises:
by the SCF, requesting or instructing an adaptor to send a content switching request to the PSS server so that the PSS server uses the before-switching media channel to send the switched media content.

6. The method for switching a streaming service according to claim 5, wherein:
after receiving the switching request, the PSS server generates at least one of: media description information, or synchronization source information, and information about a media component switched successfully, and such information is transmitted by the SCF and/or the adaptor to the UE.

7. The method for switching a streaming service according to claim 1, wherein:
a media server comprises an adaptor and a Packet Switched Streaming service PSS server; and
the receiving of the switching request comprises:
by the adaptor, receiving the switching request from the UE, sending a request for modifying a media transmission channel to the SCF, sending a content switching request to the PSS server, and using the before-switching media channel to send the switched media content.

8. The method for switching a streaming service according to claim 7, wherein:
the sending of the request for modifying the media transmission channel to the SCF comprises:
by the adaptor, obtaining Quality of Service QoS parameter information of an after-switching media transmission channel, and sending the request for modifying the media transmission channel according to the QoS parameter information.

9. A media server, comprising:
a receiving module (131), adapted to receive a switching request sent by a User Equipment UE (121) directly, or receive a switching request sent by a Service Control Function SCF (123) after the SCF receives the switching request sent by the UE (121) ; and
a sending module (132), adapted to use a before-switching media channel to send switched media content to the UE (121);
a switching information exchanging module (134), adapted to: transmit switching information to the SCF (123), wherein the switching information comprises at least one of: identifier of target content of switching, identifier of a target component of switching, user information, identifier of source content of switching, identifier of a source component, substitution relation between before-switching media and after-switching media, mapping relation between a before-switching component and an after-switching component, mapping relation between a media channel and a before-switching media component, mapping relation between the media channel and the after-switching media component, and parameters of a transmission channel required by the content or component; and
wherein:
the media server comprises an adaptor and a Packet Switched Streaming service PSS server, the adaptor is connected with the PSS server, the UE, and the SCF, and the switching information is transmitted by the adaptor to the SCF.

## Patentansprüche

1. Verfahren zum Wechseln eines "Streaming"-Dienstes in einer IP-Multimedia-Teilsystem-Architektur (IP Multimedia Subsystem architecture, IMS-Architektur), wobei das Verfahren Folgendes umfasst:
Empfangen (101) durch einen Medien-Server einer Wechselanforderung, die einen Identifizierer der angeforderten Medien führt, von einem Anwendergerät (User Equipment, UE) oder einer Dienststeuerfunktion (Service Control Function, SCF) (123), nachdem die SCF die durch das UE (121) gesendete Wechselanforderung empfangen hat; und
Verwenden (102) eines Medienkanals vor dem Wechseln durch den Medien-Server,
um gewechselten Medieninhalt an das UE zu senden,
wobei der Medien-Server Wechselinformationen an die SCF sendet und die SCF Dienste gemäß den Wechselinformationen abwickelt;
der Medien-Server einen Adapter und einen Server für paketvermittelte "Streaming"-Dienste (Packet Switched Streaming service server, PSS-Server) umfasst; und
das Senden durch den Medien-Server der Wechselinformationen an die SCF Folgendes umfasst: durch den Adapter Senden der Wechselinformationen an die SCF;
wobei die Wechselinformationen wenigstens eines der Folgenden umfassen: einen Identifizierer eines Zielinhalts des Wechselns, einen Identifizierer einer Zielkomponente des Wechselns, Anwenderinformationen, einen Identifizierer eines Quellinhalts des Wechselns, einen Identifizierer einer Quellkomponente, eine Ersetzungsbeziehung zwischen den Medien vor dem Wechseln und den Medien nach dem Wechseln, eine Abbildungsbeziehung zwischen einer Komponente vor dem Wechseln und einer Komponente nach dem Wechseln, eine Abbildungsbeziehung zwischen einem Medienkanal und einer Medienkomponente vor dem Wechseln, eine Abbildungsbeziehung zwischen dem Medienkanal und einer Medienkomponente nach dem Wechseln und Parameter eines Sendekanals, der durch den Inhalt oder die Komponente benötigt wird.

2. Verfahren zum Wechseln eines "Streaming"-Dienstes nach Anspruch 1, wobei das Abwickeln der Dienste durch die SCF gemäß den Wechselinformationen Folgendes umfasst:
durch die SCF Ausführen einer Dienststatistik gemäß den Wechselinformationen;
oder
Ausführen der Gebührenberechnung gemäß den Wechselinformationen; oder
Teilnehmen am Modifizieren, Hinzufügen oder Freigegeben eines Medienkanals gemäß den Wechselinformationen, um den Anforderungen des Sendens des gewechselten Medieninhalts zu entsprechen.

3. Verfahren zum Wechseln eines "Streaming"-Dienstes nach Anspruch 1, wobei nach dem Empfangen der Wechselanforderung das Verfahren ferner Folgendes umfasst:
durch den Adapter Senden der Wechselanforderung an den PSS-Server und
Verwenden des Medienkanals vor dem Wechseln, um den gewechselten Medieninhalt zu senden.

4. Verfahren zum Wechseln eines "Streaming"-Dienstes nach Anspruch 1, wobei: falls die Wechselanforderung durch das UE an die SCF gesendet wird und die SCF den Medien-Server auffordert oder anweist, das Wechseln auszuführen, die Wechselanforderung wenigstens eines des Folgenden umfasst:
einen Identifizierer eines Zielinhalts des Wechselns, einen Identifizierer einer Zielkomponente des Wechselns, Anwenderinformationen, einen Identifizierer eines Quellinhalts des Wechselns, einen Identifizierer einer Quellkomponente, eine Ersetzungsbeziehung zwischen den Medien vor dem Wechseln und den Medien nach dem Wechseln, eine Abbildungsbeziehung zwischen einer Komponente vor dem Wechseln und einer Komponente nach dem Wechseln, eine Abbildungsbeziehung zwischen einem Medienkanal und einer Medienkomponente vor dem Wechseln, eine Abbildungsbeziehung zwischen dem Medienkanal und einer Medienkomponente nach dem Wechseln und eine Angabe der Wiederverwendung des Medienkanals vor dem Wechseln.

5. Verfahren zum Wechseln eines "Streaming"-Dienstes nach Anspruch 1, wobei:
der Medien-Server einen Adapter und einen Server für paketvermittelte "Streaming"-Dienste, PSS-Server, umfasst; und
das Auffordern oder das Anweisen des Medien-Servers durch die SCF, das Wechseln auszuführen und den Medienkanal vor dem Wechseln zu verwenden, um den gewechselten Medieninhalt zu senden, Folgendes umfasst:
durch die SCF Auffordern oder Anweisen eines Adapters, eine Inhaltswechselanforderung an den PSS-Server zu senden, so dass der PSS-Server den Medienkanal vor dem Wechseln verwendet, um den gewechselten Medieninhalt zu senden.

6. Verfahren zum Wechseln eines "Streaming"-Dienstes nach Anspruch 5, wobei:
nach dem Empfangen der Wechselanforderung der PSS-Server wenigstens eines des Folgenden erzeugt: Medienbeschreibungsinformationen oder
Synchronisationsquelleninformationen und Informationen über eine erfolgreich gewechselte Medienkomponente, wobei derartige Informationen durch die SCF und/oder den Adapter an das UE gesendet werden.

7. Verfahren zum Wechseln eines "Streaming"-Dienstes nach Anspruch 1, wobei:
ein Medien-Server einen Adapter und einen Server für paketvermittelte "Streaming"-Dienste, PSS-Server, umfasst; und
das Empfangen der Wechselanforderung Folgendes umfasst:
durch den Adapter Empfangen der Wechselanforderung von dem UE, Senden einer Anforderung zum Modifizieren eines Medienübertragungskanals an die SCF, Senden einer Inhaltswechselanforderung an den PSS-Server und Verwenden des Medienkanals vor dem Wechseln, um den gewechselten Medieninhalt zu senden.

8. Verfahren zum Wechseln eines "Streaming"-Dienstes nach Anspruch 7, wobei:
das Senden der Anforderung zum Modifizieren des Medienübertragungskanals an die SCF Folgendes umfasst:
durch den Adapter Erhalten von Dienstqualitäts-Parameterinformationen, QoS-Parameterinformationen, eines Medienübertragungskanals nach dem Wechseln und
Senden der Anforderung zum Modifizieren des Medienübertragungskanals gemäß den QoS-Parameterinformationen.

9. Medien-Server, der Folgendes umfasst:
ein Empfangsmodul (131), das dafür ausgelegt ist, eine durch ein Anwendergerät, UE, (121) gesendete Wechselanforderung direkt zu empfangen oder eine durch eine Dienststeuerfunktion, SCF, (123) gesendete Wechselanforderung zu empfangen,
nachdem die SCF die durch das UE (121) gesendete Wechselanforderung empfangen hat; und
ein Sendemodul (132), das dafür ausgelegt ist, einen Medienkanal vor dem Wechseln zu verwenden, um gewechselten Medieninhalt an das UE (121) zu senden;
ein Wechselinformations-Austauschmodul (134), das dafür ausgelegt ist:
Wechselinformationen an die SCF (123) zu senden, wobei die Wechselinformationen wenigstens eines der Folgenden umfassen: einen Identifizierer eines Zielinhalts des Wechselns, einen Identifizierer einer Zielkomponente des Wechselns, Anwenderinformationen, einen Identifizierer eines Quellinhalts des Wechselns, einen Identifizierer einer Quellkomponente, eine Ersetzungsbeziehung zwischen den Medien vor dem Wechseln und den Medien nach dem Wechseln, eine Abbildungsbeziehung zwischen einer Komponente vor dem Wechseln und einer Komponente nach dem Wechseln, eine Abbildungsbeziehung zwischen einem Medienkanal und einer Medienkomponente vor dem Wechseln, eine
Abbildungsbeziehung zwischen dem Medienkanal und einer Medienkomponente nach dem Wechseln und Parameter eines Sendekanals, der durch den Inhalt oder die
Komponente benötigt wird; und
wobei:
der Medien-Server einen Adapter und einen Server für paketvermittelte "Streaming"-Dienste, PSS-Server, umfasst, wobei der Adapter mit dem PSS-Server, dem UE und
der SCF verbunden ist und die Wechselinformationen durch den Adapter an die SCF gesendet werden.

## Revendications

1. Procédé de commutation d'un service de diffusion en flux dans une architecture de sous-système multimédia IP, IMS (IP Multimedia Subsystem), comprenant :
la réception (101), par un serveur média, d'une demande de commutation qui achemine un identifiant de données médias demandées en provenance d'un équipement d'utilisateur, UE (User Equipment), ou d'une fonction de commande de services, SCF (Service Control Function) (123), après que la SCF a reçu la demande de commutation envoyée par l'UE (121) ; et
l'utilisation (102) d'un canal média avant commutation par le serveur média pour envoyer un contenu média commuté à l'UE ;
dans lequel le serveur média envoie des informations de commutation à la SCF, et la SCF traite des services conformément aux informations de commutation ;
le serveur média comprend un adaptateur et un serveur de services de diffusion en flux à commutation de paquets, PSS (Packet Switched Streaming) ; et
l'envoi par le serveur média des informations de commutation à la SCF comprend :
l'envoi, par l'adaptateur, des informations de commutation à la SCF ;
dans lequel les informations de commutation comprennent au moins l'un des éléments suivants : un identifiant d'un contenu cible de la commutation, un identifiant d'un composant cible de la commutation, des informations d'utilisateur, un identifiant d'un contenu source de la commutation, un identifiant d'un composant source, une relation de substitution entre les données médias avant commutation et les données médias après commutation, une relation de correspondance entre un composant avant commutation et un composant après commutation, une relation de correspondance entre un canal média et un composant média avant commutation, une relation de correspondance entre le canal média et un composant média après commutation et
des paramètres d'un canal de transmission exigés par le contenu ou le composant.

2. Procédé de commutation d'un service de diffusion en flux selon la revendication 1, dans lequel le traitement de services par la SCF conformément aux informations de commutation comprend :
l'exécution, par la SCF, de statistiques de services conformément aux informations de commutation ; ou
l'exécution d'une facturation conformément aux informations de commutation ; ou
la participation à la modification, à l'ajout ou à la libération d'un canal média conformément aux informations de commutation afin de respecter des exigences de transmission du contenu média commuté.

3. Procédé de commutation d'un service de diffusion en flux selon la revendication 1, dans lequel, après réception de la demande de commutation, le procédé comprend en outre :
l'envoi, par l'adaptateur, de la demande de commutation au serveur PSS et l'utilisation du canal média avant commutation pour envoyer le contenu média commuté.

4. Procédé de commutation d'un service de diffusion en flux selon la revendication 1, dans lequel : si la demande de commutation est envoyée par l'UE à la SCF et si la SCF demande ou ordonne au serveur média d'exécuter une commutation, la demande de commutation comprend au moins l'un des éléments suivants :
un identifiant d'un contenu cible de la commutation, un identifiant d'un composant cible de la commutation, des informations d'utilisateur, un identifiant d'un contenu source de la commutation, un identifiant d'un composant source, une relation de substitution entre les données médias avant commutation et les données médias après commutation, une relation de correspondance entre un composant avant commutation et un composant après commutation, une relation de correspondance entre un canal média et un composant média avant commutation, une relation de correspondance entre le canal média et un composant média après commutation et une indication de réutilisation du canal média avant commutation.

5. Procédé de commutation d'un service de diffusion en flux selon la revendication 1, dans lequel :
le serveur média comprend un adaptateur et un serveur de services de diffusion en flux à commutation de paquets, PSS ; et
le fait de demander ou d'ordonner, par la SCF, au serveur média d'exécuter une commutation et d'utiliser le canal média avant commutation pour envoyer le contenu média commuté comprend :
le fait que la SCF demande ou ordonne à un adaptateur d'envoyer une demande de commutation de contenu au serveur PSS de manière à ce que le serveur PSS utilise le canal média avant commutation pour envoyer le contenu média commuté.

6. Procédé de commutation d'un service de diffusion en flux selon la revendication 5, dans lequel :
après réception de la demande de commutation, le serveur PSS génère au moins l'un des éléments suivants : des informations de description des données médias ou des informations de source de synchronisation et des informations concernant un composant média dont la commutation a réussi, ces informations étant transmises par la SCF et/ou l'adaptateur à l'UE.

7. Procédé de commutation d'un service de diffusion en flux selon la revendication 1, dans lequel :
un serveur média comprend un adaptateur et un serveur de service de diffusion en flux à commutation de paquets, PSS ; et
la réception de la demande de commutation comprend :
la réception, par l'adaptateur, de la demande de commutation en provenance de l'UE,
l'envoi d'une demande de modification d'un canal de transmission média à la SCF,
l'envoi d'une demande de commutation de contenu au serveur PSS et l'utilisation du canal média avant commutation pour envoyer le contenu média commuté.

8. Procédé de commutation d'un service de diffusion en flux selon la revendication 7, dans lequel :
l'envoi de la demande de modification du canal de transmission média à la SCF comprend :
l'obtention, par l'adaptateur, d'informations de paramètres de qualité de service, QoS (Quality of Service), d'un canal de transmission média après commutation, et l'envoi de la demande de modification du canal de transmission média conformément aux informations de paramètres de QoS.

9. Serveur média, comprenant :
un module de réception (131), conçu pour recevoir une demande de commutation envoyée directement par un équipement d'utilisateur, UE (121), ou recevoir une demande de commutation envoyée par une fonction de commande de services, SCF (123), après que la SCF a reçu la demande de commutation envoyée par l'UE (121) ;
et
un module d'envoi (132), conçu pour utiliser un canal média avant commutation pour envoyer un contenu média commuté à l'UE (121) ;
un module d'échange d'informations de commutation (134), conçu pour : transmettre des informations de commutation à la SCF (123), dans lequel les informations de commutation comprennent au moins l'un des éléments suivants : un identifiant d'un contenu cible de la commutation, un identifiant d'un composant cible de la commutation, des informations d'utilisateur, un identifiant d'un contenu source de la commutation, un identifiant d'un composant source, une relation de substitution entre les données médias avant commutation et les données médias après commutation,
une relation de correspondance entre un composant avant commutation et un composant après commutation, une relation de correspondance entre un canal média et un composant média avant commutation, une relation de correspondance entre le canal média et le composant média après commutation et des paramètres d'un canal de transmission exigés par le contenu ou le composant ; et
dans lequel :
le serveur média comprend un adaptateur et un serveur de services de diffusion en flux à commutation de paquets, PSS, l'adaptateur est connecté au serveur PSS, à l'UE et à la SCF, et les informations de commutation sont transmises par l'adaptateur à la SCF.
